# EUROPEAN PATENT SPECIFICATION

(11) **EP 3 100 020 B1**
(45) Date of publication and mention of the grant of the patent: **02.01.2019**
(21) Application number: 15708311.4
(22) Date of filing: 29.01.2015
(51) Int. Cl.: G01L 15/00, G01L 27/00, G01L 21/34

(54) **MINIATURIZED DEVICE FOR MEASUREMENTS OF VERY LOW PRESSURE AND OF GAS CONCENTRATIONS**
MINIATURISIERTES GERÄT ZUR MESSUNG VON SEHR NIEDRIGEM DRUCK UND VON GASKONZENTRATIONEN
DISPOSITIF MINIATURISÉ POUR MESURES DE PRESSION TRÈS BASSES ET DE CONCENTRATIONS DE GAZ

(30) Priority: 31.01.2014 IT MI20140139
(43) Date of publication of application: 07.12.2016
(73) Proprietor: Nanotech Analysis S.r.l., 10128 Torino (IT)
(72) Inventor: MENSA, Gianpiero, I-10128 Torino (IT)
(74) Representative: Brunazzi, Stefano
(86) International application number: PCT/IB2015/050680
(87) International publication number: WO 2015/114559

(56) References cited:
- EP-A1- 1 571 435
- US-A- 3 906 237
- US-A- 4 598 381
- US-A1- 2004 017 202
- US-A1- 2005 030 044
- US-A1- 2011 239 772
- US-B1- 6 452 167
- US-B1- 7 129 708

## Description

### TECHNOLOGICAL BACKGROUND OF THE INVENTION

### Field of Application

The present invention relates to the field of pressure sensor devices, particularly miniaturized sensor devices, suitable to measure very low level pressures (up to high vacuum conditions) and to measure partial pressures, i.e., gas concentrations.

### Description of the Prior Art.

In the field of measurements of low or very low pressures (for example, below 10⁻³ mbar), several rather sophisticated and complex systems and devices are known, usually called "vacuum gauges".

Known vacuum gauges are mainly of two types: "Hot Cathode Ionization Gauge" (e.g., of the Bayard-Alpert type) and "Cold Cathode Ionization Gauge" (e.g., Penning gauge and Inverted Magnetron IMG, which ionize the residual gas by means of a glow and/or plasma discharge). For example, the "Bayard-Alpert" vacuum gauges are substantially based on an emission of electrons, which ionize the gas particles that are present, and on the subsequent detection of the obtained ions, the number of which depends on the concentration of gas particles, and thus on the gas pressure.

These devices operate on a pressure range which cannot decrease under certain limits (for example, such devices are not able to detect pressures of 10⁻¹² - 10⁻¹³ mbar). This is primarily caused by the phenomenon of X-ray generation, inherently connected to the operating principle of such devices, i.e., a phenomenon caused by electron recombination, for example on an acceleration grid, which masks the detection results, i.e., the detected ions, when the pressures are very low.

In the known "hot cathode" devices, there is the further drawback that the emission electronic current is generated by Joule effect through filaments operating at temperatures of 1800/2000 K, and thus affects and disturbs the measurement process.

In the known "cold cathode" devices, on the other hand, further limitations result from a poor measurement rapidity and from triggering difficulties.

In some further known solution, attempts have been made to replace, in "hot cathode" devices, the standard filaments with field-effect electrons sources (for example nanotubes, micro-tips, etc.). However, in these solutions, both the electronic current density, thus the generated ionic signal, and the electron recombination rate, thus the generated X-rays, result to be increased in a comparable manner. Therefore, these solutions do not offer substantial improvements in terms of sensitivity and signal-to-noise ratio.

Another drawback of these known devices is generally related to the overall dimensions and complexity, deriving *inter alia* from the requirement of mounting "macroscopic" electronic components, in order to be able to operate.

Moreover, to work efficiently in a real operating environment, the individual pressure measurement devices must include not only the pressure sensor itself, but also further components (for example, processing modules, interface modules, either wired or wireless, towards higher-level controllers, etc.). Each of said devices actually ends up being a "system". This leads to a disadvantageous increased complexity and reduced reliability of the devices.

It should be noted that an application, having a great and growing importance, relates to the use of pressure measurement systems/devices in production machines or plants or manufacturing environments or instruments for analysis and measurement, where it may be necessary to measure the pressure with a high precision, in many different points, over wide ranges, in often unfavorable environmental conditions, resulting in critical, or even extreme, operating conditions for the devices.

In this application, the need emerges to have devices as compact, simple and miniaturized as possible, while maintaining high performances in terms of precision and reliability.

The above-mentioned devices, as remarked above, do not meet this need in a satisfactory way.

In addition to the above, with reference to the properties of precision and reliability, calibration procedures, before use, and diagnostics procedures, during use, with possible readjustment or re-calibration, are increasingly important.

Regarding this, known devices generally require to be calibrated and subjected to diagnostics and re-calibration outside the instrument/environment where they are normally installed, i.e., off-line.

Therefore, the further need to have pressure measurement devices (vacuum gauges) which are as "self-contained" as possible, in terms of calibration and diagnostics, is much felt. Again, the known devices, cited above, do not offer suitable fulfillments to this need.

It should also be observed that the needs for miniaturization and self-sufficiency, even if they are both desired, may put conflicting design requirements which are very difficult to fulfill altogether.

Finally, in view of the convenience of measuring not only a total pressure but also partial pressures and gas concentrations, the need is felt to carry out measurements of both total and partial pressure, by means of an individual device. This need is also not met by the prior art.

In light of the above, the object of the present invention is to devise and provide a miniaturized device for measurements of very low level pressures and of gas concentration, and a related measurement method, which are improved such as to fulfill the abovementioned needs and to be able to at least partially overcome the drawbacks described above with reference to the prior art.

### SUMMARY OF THE INVENTION.

This object is achieved by a device according to claim 1.

Further embodiments of this device are defined in the dependent claim 2 to 15.

### BRIEF DESCRIPTION OF THE DRAWINGS.

Further characteristics and advantages of a miniaturized device for measuring very low level pressures, and concentration, according to the present invention, will result from the following description of preferred embodiments given by way of indicative but not limitative examples, with reference to the attached figures, in which:
- Fig. 1 illustrates a structural diagram of a device according to the invention;
- Fig. 2 illustrates a simplified functional diagram of an embodiment of the device according to the invention;
- Fig. 3 shows a structural diagram of a further embodiment of a device according to the invention;
- Fig. 4 shows another implementation example of the device of Fig. 3;
- Figs. 5A and 5B illustrate a structural diagram of another embodiment of a device according to the invention;
- Fig. 6 illustrates a structural diagram of a further embodiment of a device according to the invention;
- Fig. 7 represents a mode of ion extraction, provided in one embodiment of the device.

### DETAILED DESCRIPTION.

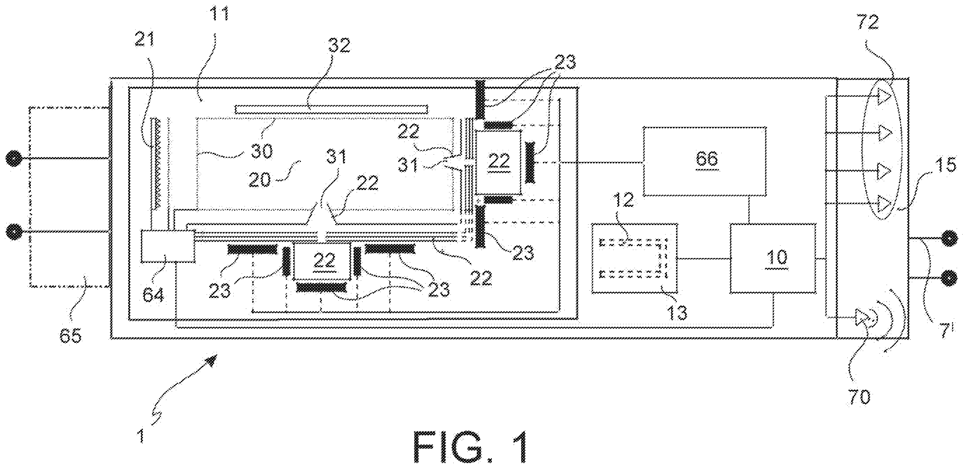

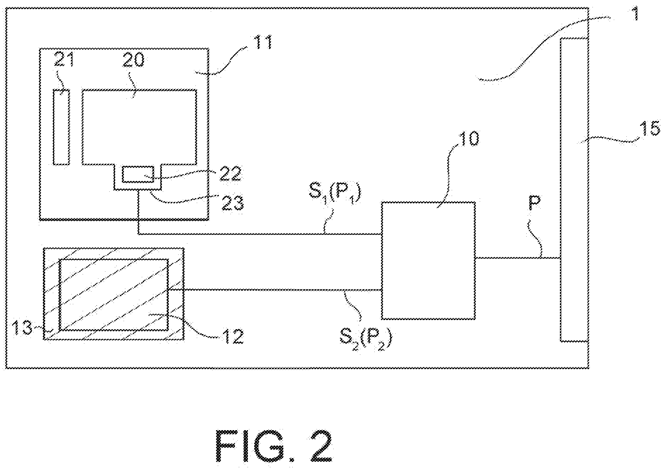

With reference to the figures, particularly to Figs. 1 and 2, a miniaturized device 1 for measuring pressure at a very low level, according to the invention, is described.

The device 1 comprises an ionization-based detection member 11, configured to detect a pressure value P₁ and to generate an electrical signal S₁ representative of the pressure value P₁.

The device 1 further comprises electronic processing means 10, which are operatively connected to the ionization-based detection member 11, and configured to generate a measured pressure value P based on the above-mentioned electrical signal S₁; the device 1 also comprises interface means 15, operatively connected to the electronic processing means 10, and configured to provide in output the measured pressure value P.

The United States Patent Application US 2005/0030044 A1 describes a ionization vacuum gauge, that is a device for vacuum pressure measurements based on ionization phenomena.

The United States Patent US 6,452,167 B1 describes a miniature quadrupole mass spectrometer having a cold cathod ionization source.

The ionization-based detection member 11, in turn, comprises an ionization source 21 and an ionization region 20, containing gas particles (whose pressure is to be measured), which is arranged in such a way to be passed through by ionization particles (e.g., electrons) generated by the source, such that the ionization particles ionize the gas particles, thereby generating respective ions.

The ionization-based detection member 11 further comprises ion extraction means 22, configured to determine a preferential trajectory for the generated ions, within the ionization region 20, towards at least one ion extraction window 31; and then the member 11 comprises at least one ion detector 23, configured to detect ions and generate said electrical signal S₁ depending on the amount of detected ions and representative of the pressure value of the gas particles that are present in the ionization region.

The at least one ion detector 23 has micrometric dimensions and is arranged at said respective at least one ion extraction window 31, such as to be shielded against trajectories of X-rays generated by impacts of the ionizing particles (e.g., electrons) with parts of the ionization region 20 other than the at least one ion detector 23.

The ionization-based detection member 11, the electronic processing means 10 and the interface means 15 are included in one integrated device.

It should be noted that as "integrated device" is meant herein a device that is manufactured by means of integrated micro/nano-electronic techniques and that is either contained or containable in a single, individual package.

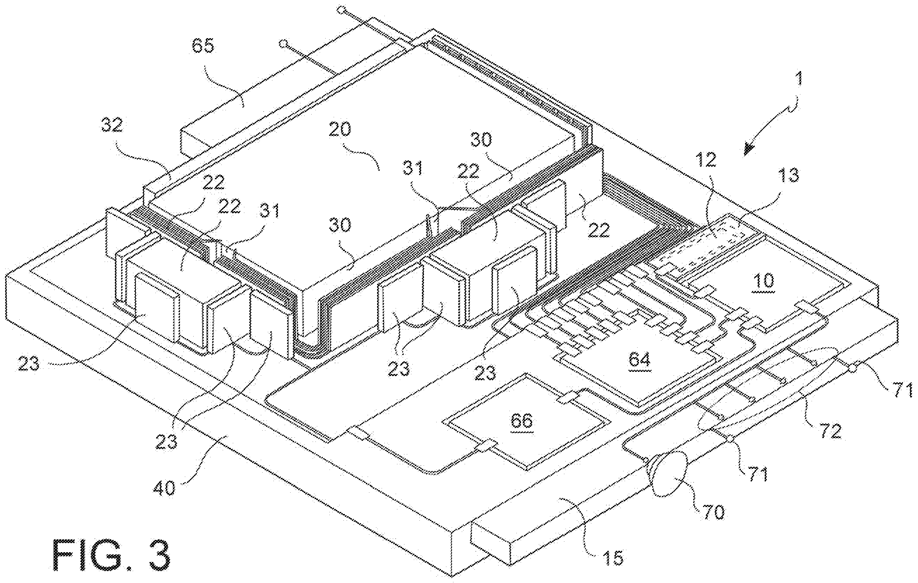

According to a preferred exemplary embodiment, the device 1 is an integrated device made by means of a single chip 40 (shown for example in Fig. 3), typically made of silicon. In this case, the ionization-based detection member 11, the electronic processing means 10 and the interface means 15 are comprised (i.e., integrated) in the single chip 40 of the integrated device 1.

According to a different example, also included in the invention, the device 1 comprises two half-chips, which are connected to each other also at a microscopic level.

According to other exemplary embodiments, the device 1 may comprise multiple chips connected to each other at a microscopic scale, or an individual multi-layer chip, such as to obtain anyway an integrated device.

Based on the above, the definition of "miniaturized device" can be also understood, i.e., a device which, being integrated, has a size in the micrometric scale, for example of an overall order of magnitude of hundreds of µm² or of mm², which size is still lower than the minimum size that can be handled and operated, wherein such minimum size is obtained by providing the device with a suitable packaging.

It should be further noted that this miniaturization not only concerns the actual sensor members, but also the further processing and interface members belonging to the device.

With reference now to the ionization-based detection member 11, it should be noted that it can be considered, in some aspects, as a miniaturized and optimized mass spectrometer, in terms that will be better described herein below.

According to an exemplary embodiment, the ionization source 21 comprises at least one electron emission source. This source can be for example an "El (Electron Ionization) Smart" source, particularly a "cold" field-effect emission source, such as a nano-tubes and/or micro-tips source; the "cold" emission source can provide an increase of the ionization efficiency even at extremely small pressures. In other exemplary embodiments, the ionization source can be a plasma (o glow) source, or a chemical ionization (CI) source, or another source, *per-se* known, suitable to cause particle ionization according to one of the known ionization methods.

The ionization region 20 can be described as a "chamber" of microscopic dimensions, for example, parallelepiped shaped with sidewalls forming a grid 30 on which the electrons can collide and recombine. At one of the sidewalls, the ionization source 21 can be arranged, emitting particles (for example, electrons) that are capable to ionize the gas particles in the "chamber", which electrons travel in an almost straight direction towards the opposite wall of the grid 30.

The ion extraction means 22 are configured to generate suitable electromagnetic fields, such as to extract the ionized, thus charged, particles from inside the chamber and drive them, by means of electromagnetic interaction, along a desired trajectory, or preferential trajectory, passing through one or more preset exit points, where the above-mentioned one or more "extraction windows" 31 are arranged.

In other exemplary embodiments, the extraction windows can be at different points in the ionization region 20 grid.

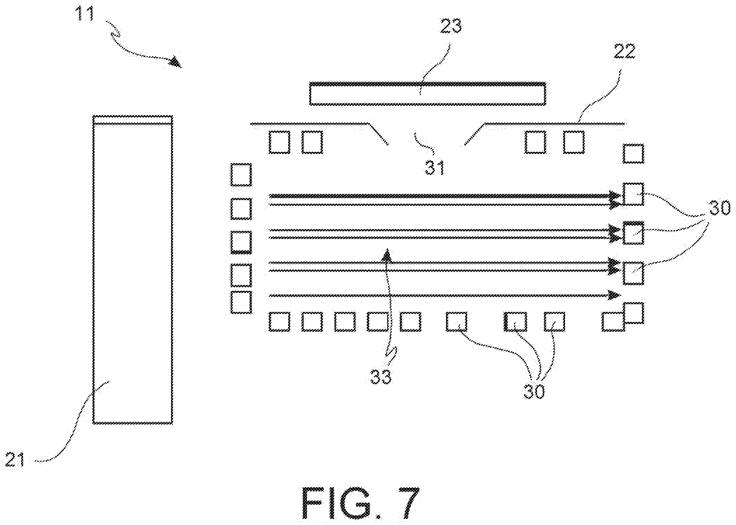

Advantageously (as shown in Fig. 7), extraction windows can be placed e.g., at the walls that are perpendicular relative to the wall where the ionization source 21 is located, such as to determine ion exit trajectories of ions that are 90°-angled with respect to the electron path 33.

Other embodiments are possible, wherein the exit trajectory is, for example, 180°-angled or inclined at a different angle, relative to the electron path (see for example Figs. 1 and 3).

According to different implementation examples included in the invention, the ion extraction means 22 can be made by means of one or more ion guides 22.

Particularly, according to some implementation variants, the ion guides 22 can consist of ion extraction nozzles 22 and/or electrostatic lenses 22 and/or electrostatic sectors and/or magnetic sectors.

More particularly, the ion guides 22 can be implemented by means of a quadrupole mass filter without bias, *per-se* known (as will be illustrated below), or by means of a radiofrequency hexapole or octupole or by an electrical or magnetic sector.

Each of the one or more ion detectors 23 can be implemented by means of a *per-se* known detector, sensitive to the ions colliding on the surface thereof, and configured to generate the above-mentioned electrical signal S₁ (typically, an electrical current) proportional to the number of colliding ions. Since the number of colliding ions is proportional to the concentration of ions present in the ionization region 20, which is in turn proportional to the number of gas particles present in the ionization region 20, and thus to the pressure, it is concluded that the electrical signal S₁ generated by the ion detector 23 is representative, with great precision, of the pressure that is present inside the ionization region.

Particularly, the ion detector 23 can be implemented by employing, on a miniaturized scale, principles used for example in known detectors of the Faraday cup, or SEM or Channeltron types.

As already remarked above, the ion detector 23 has micrometric dimensions, i.e., dimensions having a micrometric or sub-millimetric order of magnitude. More specifically, the ion detector 23 has an impact surface whose sides (if it has a square or polygonal shape) or whose radius (if it has a circular shape) are of the order of magnitude of tens or hundreds µm (micron) - and anyway sub-millimetric (e.g., about 100 µm) - such that the area of the impact surface is of a micrometric order of magnitude, i.e., less than one mm².

It should be noted that the structure of the ionization-based detection member 11 described above allows to drastically reduce, up to almost cancel, the undesired effects due to the X-rays generated in the ionization region when the electrons emitted by the source 21 recombine on the grid 30. When such X-rays collide on the one or more ion detectors 23, they generate a spurious signal (for example, a spurious electrical current) which disturbs the correct signal (representative of the number of detected ions and thus of the pressure), generates noise, and finally reduces the instrument sensitivity.

The drawbacks related to the X-rays can be reduced by means of each of the different aspect of the device described herein.

Firstly, each of the one or more ion detectors 23 is arranged outside the ionization region 20, i.e., beyond the grids 30 defining the same, and is connected to the same only by means of the one or more respective extraction windows 31, through which the ions to be detected pass. This implies that only the minimal fraction of X-rays passing through these windows, and not the totality of X-rays present in the ionization region, hits the ions detector: thus, the spurious signal generated by the X-rays and the consequent interference is reduced to a corresponding fraction. The aspect noted above is made possible by the fact that the ions can be extracted from the ionization region 20, using any geometry or angle, as shown above.

Secondly, each of the ion detectors 23 has micrometric dimensions, and the reduction of the impact surface causes a proportional reduction of the amount of impacting X-rays.

Thirdly, according to a particular implementation option, the ion extraction means 22 further comprise X-rays radiations shielding means, configured to shield the at least one ion detector with respect to X-rays, such as to reduce the exposure thereof to X rays.

According to an exemplary embodiment, the device 1 further comprises magnetic field generation means 32 (for example, a magnet, or a ferromagnetic material member), configured to generate a magnetic field such as to affect the trajectory of the ionizing electrons in a desired way. For example, this trajectory can be made helicoidal.

In accordance with an embodiment, illustrated by means of a simplified diagram in Fig. 2, and also illustrated by way of example in Fig. 1, the device further comprises at least one reference pressure sensor member 12 (for example, an electronic-mechanical sensor) arranged within a respective casing 13, that is suitable to seal the reference sensor member 12. The reference sensor 12 is configured to detect at least one respective reference pressure value P₂ and to generate a respective reference electrical signal S₂, representative of the reference pressure P₂. The reference electrical signal S₂ is provided to the electronic processing means 10, which are configured to carry out a self-calibration procedure of the device, based on the reference electrical signal S₂, as will be better illustrated below.

With reference to the protective and sealing casing 13, it should be noted that, according to an exemplary embodiment, it is configured to adopt a closed state and an open state: in the closed state, it protects the at least one second sensor member 12 from being directly exposed to the surrounding environment; in the open state, it allows at least one second sensor member 12 to be directly exposed to the surrounding environment.

The situation where the casing 13 is closed and sealed will be now considered. The casing 13 thereby encloses the reference sensor member 12, thus protecting it from degradation phenomena possibly resulting from environmental conditions, and at the same time keeping fixed pressure conditions stabilized on a known value matching the "reference pressure" value P₂, which is a certain and absolute reference point defined *a priori.* Thereby, the reference sensor 12 maintains, with a good or excellent accuracy, a "nominal behaviour" for which it has been carefully characterized *a priori.*

This reference pressure value is the basic information depending on which the processing means 10 can carry out said calibration procedure of the ionization-based detection member 11.

In greater detail, all the electro-mechanical properties of the reference sensor member 12 are known, since they have been characterized *a priori* with respect to the reference pressure, for example, as a function of operative temperature, oscillation frequency, oscillation amplitude, and so on; and they have been further stored in a memory included in the electronic processing means 10.

From a mathematical point of view, the characterization data of the second sensor member actually define a "reference hypersurface" allowing to know exactly the mechatronic properties of the reference sensor member and the operating conditions (for example, operative temperature), based on the reference electrical signal S₂ generated by the reference sensor member 12, and being known the reference pressure to which the second sensor member 12 is subjected inside the sealed casing.

Therefore, when the processing means 10 receive an electrical signal S₂ from the reference sensor member 12, they refer it to the known reference pressure value P₂, as maintained inside the sealed casing 13, and thus, based on the stored characterization data, the processing means 10 can know both the mechatronic properties and the operating conditions of the reference sensor member 12. Consequently, the processing means 10 are also able to calculate the exact conversion factor existing between S₂ and P₂ (which will be herein designated as "reference conversion factor").

Since the operating conditions of the two sensor members 11 and 12, very close to each other, are the same, except for the pressure, the processing means 10, based on the reference conversion factor, are thus capable of calculating a suitable conversion factor, i.e., a calibration factor to be applied to the signal S₁ generated by the ionization-based detection member 11, in order to precisely calculate the pressure value P to which it is subjected, i.e. the value to be measured.

Briefly, due to the fact of receiving information both from the ionization-based detection member 11 and the reference sensor member 12, the processing means 10 are capable to estimate more accurately the actual pressure present at the device, (the measured pressure P), by taking into account both the reference electrical signal S₁ and the reference electrical signal S₂.

The methodologies of estimate of the pressure P, based on the electrical signals S₁ and S₂ representative of the pressures P₁ e P₂ detected by the ionization-based detection member 11 and reference sensor member 12, can be various, also different from what described above by way of example.

It should be also noted that, according to a further implementation option, the device comprises a plurality of reference sensor members 12, in order to detect a respective plurality of reference pressure values P₂, and generate a respective plurality of reference electrical signals S₂ representative of such second pressure values P₂; the electronic processing means 10 are further configured to generate the measured pressure value P based on a processing of said reference electrical signals S₂.

The plurality of "reference sensors" can be exploited both to improve the estimate precision and for the sake of redundancy and reliability.

The operation described above is carried out both upon activation of the device 1 and during the normal operating cycle; thus, such operation carries out an "initial self-calibration" and a "running calibration" procedure, which the device is able to perform.

In addition, according to an implementation example, the electronic processing means 10 are configured to process the data received from the reference pressure member 12, and, based on said received data, to carry out a diagnostic procedure of the ionization-based detection member 11, such as to identify possible performance degradation phenomena to which the detection member is subjected.

More precisely, in case the pressure existing in the environment of the device is known and is substantially equal to the reference pressure, the signals S₁ and S₂ are compared.

In this case, if S₁ and S₂ differ by a relatively small amount, less than a preset threshold, it means that the ionization-based detection member 11 works well, and diagnostics have a positive outcome; possibly, the detected difference is compensated by acting on the above-mentioned conversion factor, in a way similar to what described above about the calibration.

On the other hand, if S₁ and S₂ differ by a significant amount, for example more than the above-mentioned threshold, diagnostics have a negative outcome, and a mere calibration compensation is not sufficient anymore.

According to an exemplary embodiment, the device 1 is capable to carry out a diagnostic procedure even if the external environment pressure is not known, or if it does not coincide with the reference pressure, as long as this pressure is within the operation range of the reference sensor 12. In this example, the casing 13 is temporarily opened, such as to temporarily expose the reference sensor member 12 to the same environment to which the ionization-based detection member 11 is exposed. Then, the diagnostic procedure is performed, and finally the casing 13 is closed and sealed again and the reference pressure conditions are restored, for example by means of an embedded "getter".

In case a plurality of reference sensor members 12 are provided, it is possible to keep one of them always closed and sealed, under reference pressure conditions.

In case the diagnostic procedure yields a negative outcome, according to a further exemplary option, the electronic processing means 10 are also configured to carry out an adjustment and/or compensation procedure on the ionization-based detection member 11 to correct and/or compensate performance degradation phenomena identified based on the results of said diagnostic procedure.

It should be noted that, in other exemplary implementation options, the adjustment can be performed also based on optimization procedures directly operating on the electrical/electronic variables on which the detection mechanism is based.

In a possible embodiment, the electronic processing means 10 are configured to store desired operating conditions of the ionization-based detection member 11, in order to compare the desired operating conditions with detected operating conditions by means of a diagnostic procedure and to intervene, based on such a comparison, by means of an adjustment procedure, to restore the desired operating conditions and ensure the repeatability of the performed measurements.

The advantage of having available in the device 1 a diagnostic procedure, which is actually a "self-diagnostics", is evident. The further advantage of having available the consequent adjusting (o recalibration) procedure, which is actually a "self-adjusting" procedure, is also evident.

Only if even this "self-adjusting" procedure fails to restore proper operating conditions, a failure signal is sent from the electronic processing means 10 towards the higher level system controllers.

In order to allow the adjusting procedure, the device 1 further comprises controlled heating means (not illustrated in the figures) comprising one or more temperature sensors, e.g., miniaturized thermometer(s), and at least one heating member (for example, a micro-resistor), placed near the ionization-based detection member 11, and a heat supply (or "heater") typically connected to an external supply interface 65. The controlled heating means are configured to carry out a degassing and/or a removal of gases adsorbed on portions of the ionization-based detection member 11, under the control of the electronic processing means 10, which in turn operate based on the temperature detected by the thermometer and the results of the diagnostic procedure.

In this case, the above-mentioned adjusting procedure of the first sensor member comprises the degassing and/or removal of gases adsorbed in portions of the ionization-based detection member 11, by means of the controlled heating means.

It should be noticed that the above-mentioned heater can be used to vary the operating thermal conditions of the device, in a controlled manner, also during further operating steps other than self-adjusting.

With reference now to the reference sensor member 12, it should be observed that, according to an embodiment, it can comprise a MEMS/NEMS (Micro/Nano-Electro-Mechanical System) oscillating member.

Particularly, according to an implementation option, this MEMS/NEMS oscillating member comprises a micro-cantilever 12, which is configured to oscillate with parameters dynamically depending on the pressure to which it is subjected.

The operating principle of the micro-cantilever provides that the micro-cantilever oscillates with a damping factor α depending on the pressure to which it is subjected. Therefore, the micro-cantilever is able to generate an electrical signal S₂ whose frequency is representative of the pressure to which the micro-cantilever is subjected. Typically, the damping factor α is inversely proportional to the (miniaturized) thickness d of the micro-cantilever.

According to an implementation option, the micro-cantilever 12 is excited by applying a forcing waveform having a known frequency. The dynamic response of the micro-cantilever and the damping factor α are indicative of a pressure variation (ΔP) relative to the nominal pressure. To this purpose, the device may further comprise either a function-generator circuit or a frequency-generator circuit configured to cause an oscillation on the micro-cantilever.

Moreover, in this implementation option, it is provided that the electronic processing means 10 comprise a processing unit and a demodulating circuit, configured to estimate an output oscillation frequency of the micro-cantilever, based on the frequency of the electrical signal S₂ generated by the reference sensor member 12, and on the excitation signal; the demodulating circuit then communicates to the processing unit an information related to such oscillation frequency and to the excitation signal frequency.

According to an exemplary implementation option, the demodulating circuit is a signal "lock-in" circuit.

The implementation option illustrated above is actually based on a MEMS/NEMS oscillator, having the micro-cantilever as an active member.

By considering the device as comprising a double MEMS/NEMS oscillator, it is can be understood how a plurality of pressure detection methodologies can be applied. Indeed, the device can be configured to detect the pressure based on one or more characteristics of the electrical signal S₂: for example, based on a variation of the oscillation frequency relative to a nominal or forcing frequency; or based on a broadening of the oscillation peak, as visible in the spectrum of each electrical signal; or further by measuring its Q factor. To this end, it is possible to use, for example, known methodologies and correlations for the operation of micro-cantilever oscillators, among which those reported in Hosaka et al., "Damping characteristics of beam-shaped micro-oscillators", Sensors and Actuators A 49 (1995), 87-95, may be cited for example.

In accordance with different particular exemplary embodiments, the micro-cantilevers 12 is configured to oscillate in a parallel direction or in a perpendicular direction relative to the surface of the chip 40 forming the device.

According to an implementation example, the device 1 further comprises protection-specific technical thin films configured to reduce the adsorption of process gases (for example hydrophobic films to prevent the adsorption of moisture present in the process environment) and to prevent corrosion phenomena. These protection thin films are arranged such as to cover at least ionization-based detection member 11.

In accordance to a further implementation example, the device further comprises a package 80 comprising micrometric frame filters, and/or anti-particulate filters, arranged such as to cover at least the ionization-based detection member 11, comprised in the device 1, and configured to protect it from particulate or soot. This option is particularly advantageous when the device 1 is intended to be used in industrial environments.

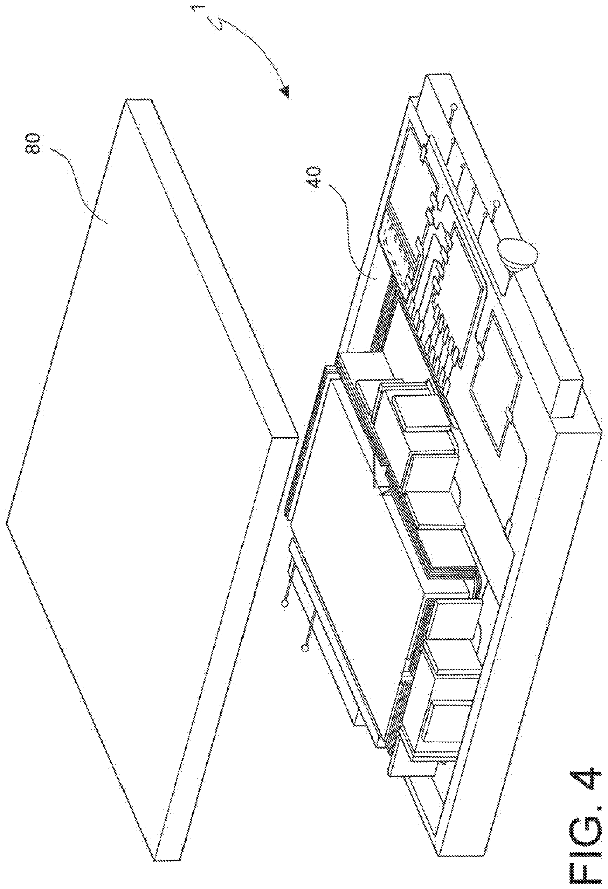

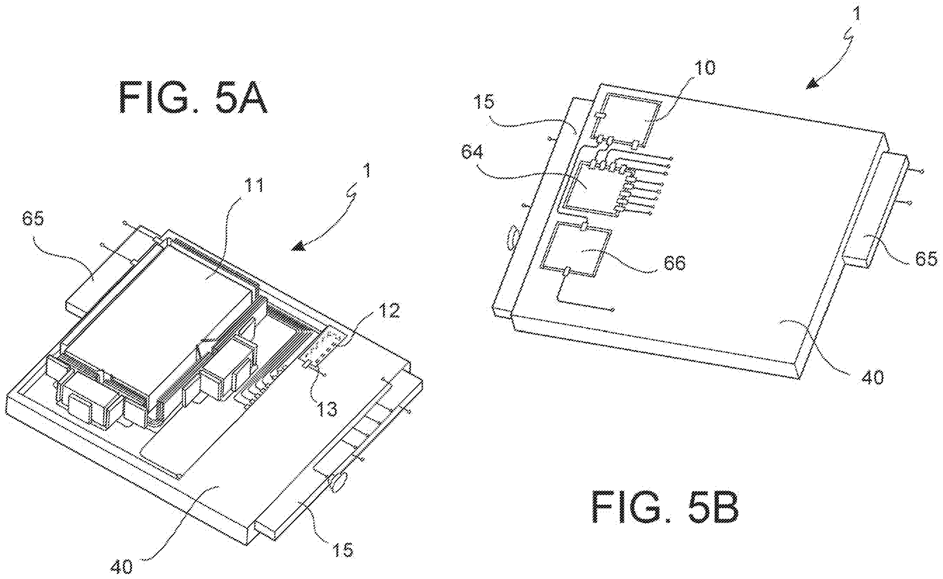

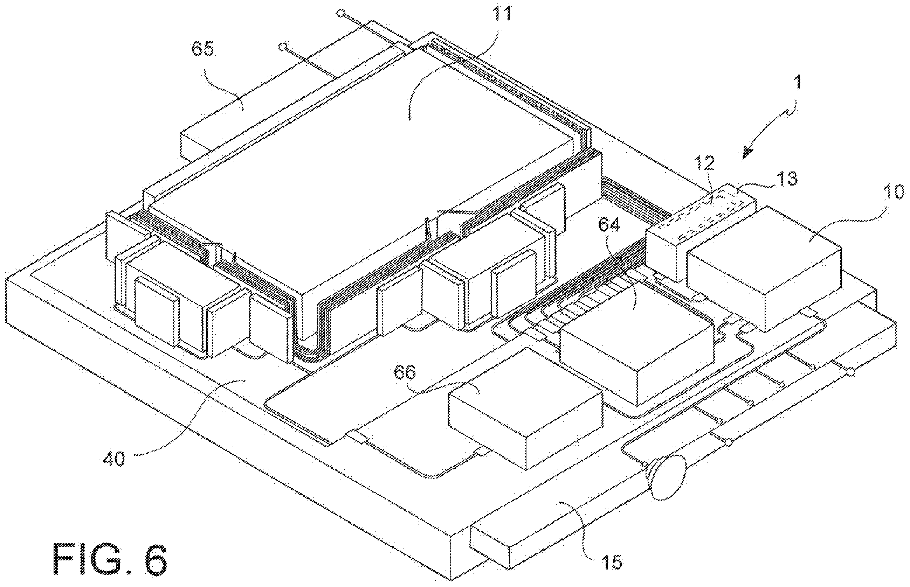

The example described herein is shown in the exploded view of Fig. 4, with reference to a first embodiment of the device 1, but it can be also applied in embodiments illustrated in Figs. 5A, 5B and 6.

According to an implementation option, the electronic processing means 10 comprise at least one electronic processor (CPU) 10 embedded in the device 1. This CPU can operate as an embedded on-chip programmable microprocessor.

According to an embodiment, the interface means 15 comprise input and output means, wireless or wired and/or with pins. As a whole, this interface can interact with the external world (for example with an external plant control system) in a versatile and adaptable manner, both to transmit and to receive information and/or signals and/or commands.

According to an exemplary embodiment, the interface means 15 comprise both wired input means 71 and a wireless transmitter 70 (for example a WiFi transmitter), to remotely transmit signals from closed operation areas (such as tyres, pump internal zones and vacuum chambers), and output pins 72 able to provide for example a direct analog output signal and/or a digital TTL output signal and/or an interface for a serial communication protocol.

The presence of a CPU 10 and of an interface 15, integrated in the device, allows the device 1 to receive and send information (for example, control signals) from and to a higher-level control system, for example the operative control system of the plant/environment where the device operates.. Thereby, the device 1 is completely integrated in the operative plant/environment.

According to an exemplary implementation option, the device 1 comprises further integrated electronic circuitry, comprising one or more of the following electronics circuits: dedicated I/O management circuits, a supply and management circuit of the heating member, a management circuit 64 of the detection member (comprising a voltage supply connected to parts of the ionization-based detection member 11 that require to be brought to controllable voltages), a circuit 66 for processing the signal coming from the at least one ion detector 23 of the detection member (comprising *inter alia* a current/voltage converter).

Several "auxiliary" electronic circuits, optionally provided in the device 1 (frequency generator, signal lock-in circuit, heater, dedicated I/O management circuits, management circuits 64 of the detection member, etc.) have been previously illustrated. These auxiliary electronic circuits are integrated in the device 1. Optionally, they can be made in the same chip containing the sensor members, the processing means and the interface means, or in further chips, micro-connected to the above-mentioned main chip, such as to constitute the integrated device.

With reference to the structural aspects of the device, particularly to the case where it comprises only one chip 40, three different embodiments are illustrated in Figs. 3, 5A-5B and 6by way of example. These different embodiments share all the components and the structural aspects previously described, which are therefore illustrated using the same numerical references.

The embodiments differ in the way the components are arranged in the device, particularly in the single chip 40 comprised in the device.

In the embodiment illustrated in Fig. 3, the ionization-based detection member 11 and the electronic processing means 10 are arranged on the same side of the chip 40 forming the device 1.

In another embodiment, the detection member 11 is arranged on one side of the chip, while the electronic processing means 10 are arranged on the other side of the chip forming the device. This is illustrated in Fig. 5A (showing one side of the chip) and 5B (showing the other side of the chip).

This second embodiment offers the advantage of segregating several heating members relative to the other components of the device, thus reducing the heat dissipation problems. Moreover, the other components are placed on the side of the chip facing zones at higher pressure or atmospheric pressure, such as they can be more easily cooled.

In the embodiment illustrated in Fig. 6, the ionization-based detection member 11 and the electronic processing means 10 are arranged such as to project as a relief, on different planes, relative to the surface of the chip 40 composing the device.

Further embodiments, also included in the invention, can be made by arranging the above-mentioned members of the device in any combination on either side of the chip 40.

The device 1 according to the invention, in all the embodiments and related variations illustrated above, is configured to detect low and very low pressures, such as under vacuum and high vacuum conditions.

According to a non-limiting example, the range of pressures detectable by the present device even reaches 10⁻¹³ mbar.

According to a preferred exemplary embodiment, the device 1 is configured to detect pressure values ranging between 10⁻¹³ mbar e 10⁻³ mbar.

According to one embodiment of the device, it is configured to also provide partial pressure measurements of several gases that are possibly present in the rarefied air contacting the ionization-based detection member 11, and thus to also perform a Gas Analysis or Residual Gas Analysis function.

In this embodiment, the ionization-based detection member 11 comprises at least one selective ion filtering member, configured to shield the at least one ion detector from all the ions but one respective selected ion, in such a way that the at least one ion detector measures the partial pressure related to this selected ion.

According to an exemplary embodiment, the filtering member is a filtering member that can be tuned to select and sequentially send different types of ions on a same ion detector, so that this ion detector sequentially measures the partial pressure of the different selected ions, such as to perform a Gas Analysis or Residual Gas Analysis function.

In accordance with a particular implementation example, the ionization-based detection member 11 comprises a plurality of additional ions detectors to detect a respective plurality of ions. The plurality of additional ions detectors is coupled with a respective plurality of ion selecting filtering members, or with only one, each of them being configured to shield the respective ion detector from all the ions except for a respective selected ion, such that the device operates both as a meter of total pressure, and as a meter of partial pressure related to each one of the plurality of selected ions, thereby realizing a Residual Gas Analysis function.

In a particular implementation example, each of the at least one ion selecting filtering member comprises a quadrupole mass filter, according to operation principles *per-se* known (described for example in Reinhard - von Zahn, "Das elektrische Massenfilter als Massenspektrometer und Isotopentrenner" Zs. Physik, 152, (1958), 143-182; or in Greaves, "Vacuum mass spectrometry", Vacuum, 20, (1970), 65-74).

In other implementation examples, the filtering member comprises electrical sectors and/or magnetic sectors.

Therefore, the device 1, based on the basic structure illustrated at the beginning of this description, can be advantageously adapted such as to also become a device for performing Residual Gas Analysis, substantially operating on the ion extraction means 22, and applying theories *per-se* known in the field of mass spectrometry.

The above-mentioned filter members, when made by means of quadrupole filters, are driven by voltages, having different amplitudes and waveforms, for example having a DC amplitude value U, and/or a superimposed oscillation amplitude value V and a superimposed oscillation frequency ω. By operating on these variables, for example, different trajectories or speeds can be imposed, in a controlled manner, to the various kinds of ions, mainly depending on their mass.

Thus, it is possible to make sure that only a desired type of ions, or any subset of ions, or all the ions, once extracted through the extraction windows 31, have a trajectory allowing them to collide on the ions detectors 23. In this way, it is possible to obtain, in a controlled manner, according to what desired, total pressure measurements, and/or partial pressure of each of different ions, and/or Residual Gas Analysis.

Moreover, by varying over time the above-mentioned electrical variables V, U, ω, in a controlled and desired manner, it is possible to operate sequentially a series of different measurements, thus progressively tuning the device to measure ions of different kind and mass.

A method for measuring pressure at a very low level, made by means of a device according to the invention, will be now described.

This method comprises the steps of detecting a pressure value P₁ and generating an electrical signal S₁ representative of the pressure value P₁, by an ionization-based detection member 11 of the device 1; then, determining a measured pressure value P based on said electrical signal S₁, by electronic processing means 10 of the device 1; and then providing in output the measured pressure value P, by means of interface means 15 of the device 1.

The ionization-based detection member 11, the electronic processing means 10 and the interface means 15 are included in a single integrated device.

The above-mentioned step of detecting a pressure value P₁ and generating an electrical signal S₁ comprises the following steps: providing in the ionization-based detection member 11 at least one ionization source 21, an ionization region 20, ion extraction means 22, at least one ion detector 23.

The ionization region 20 contains gas particles whose pressure is to be measured, and is arranged so as to be crossed by ionization particles (for example, electrons) generated by the source 2, such that the ionization particles ionize the gas particles, thereby generating respective ions.

The ion extraction means 22 are configured to determine a preferred trajectory for the generated ions, passing through at least one ion extraction window 31, through which the ions exit the ionization region 20.

The at least one ion detector 23 is configured to detect ions and generate the above-mentioned electrical signal S₁, based on the amount of ions detected and representative of the pressure value of the gas particles present in the ionization region.

The at least one ion detector 23 has micrometric dimensions and is placed at said respective at least one ion extraction window 31, such as to be shielded relative to trajectories of X-rays generated by impacts of the ionizing electrons with parts of the ionization region 20 other than the at least one ion detector 23.

As it can be seen, the object of the present invention is achieved by the system described above, by virtue of the illustrated characteristics.

From what has been described above, in fact, it is apparent that the device of the present invention is a miniaturized device capable of maintaining high accuracy and reliability performances.

It is very important to remark that, due to the above-described structural and functional characteristics of the device, especially to the properties of reduction of the X-ray impact, the device is capable of having a higher sensitivity than the solutions offered by the prior art, because it can measure high vacuum pressures even up to 10⁻¹³ mbar.

Furthermore, as illustrated above in detail, due to its self-calibration, self-diagnostic and self-adjustment properties, such device results to be self-contained. The device is also capable of dealing with, and correcting up to a certain extent, the several degradation causes which may actually arise and which would worsen the device performances, by affecting the ionization-based detection member.

In addition, the device allows, as illustrated above, to manage microscopic signals at microscopic level, with the consequent further advantage of improving the achievable signal-to-noise ratios.

Finally, as described above, the device of the invention advantageously allows obtaining both total pressure measurements and partial pressure measurements, and to also perform Residual Gas Analysis functions.

## Claims

1. A miniaturized device for measurements of very low level pressure (1), comprising:
- an ionization-based detection member (11), configured to detect a pressure value (P₁) and to generate an electrical signal (S₁) representative of said pressure value (P₁);
- electronic processing means (10), operatively connected to said ionization-based detection member (11), and configured to generate a measured pressure value (P) based on said electrical signal (S₁);
- interface means (15), operatively connected to said electronic processing means (10) and configured to provide in output said measured pressure value (P),
wherein said ionization-based detection member (11), electronic processing means (10), and interface means (15) are comprised in a single integrated device,
and wherein the ionization-based detection member (11) comprises:
- at least one ionization source (21);
- an ionization region (20), containing gas particles the pressure of which has to be measured, arranged so as to be passed through by ionization electrons generated by said source (21), so that the ionization electrons ionize the gas particles, thus generating respective ions;
- ion extraction means (22), configured to determine a preferential trajectory for the generated ions, passing through at least one ion extracting window (31), through which the ions leave the ionization region (20);
- at least one ion detector (23), configured to detect ions and generate said electrical signal (S₁) depending on the amount of ions detected and representative of the pressure value of the gas particles that are present in the ionization region (20),
the device (1) being **characterized in that** said at least one ion detector (23) has micrometric dimensions and comprises a ion impact surface having an area of less than one mm², and
said at least one ion detector (23) is arranged at said respective at least one ion extraction window (31), so as to be shielded against trajectories of X rays generated by impacts of the ionizing electrons with parts of the ionization region (20) other than the at least one ion detector (23).

2. The device (1) according to claim 1, wherein said ionization-based detection member (11), electronic processing means (10) and interface means (15) are comprised in a single chip (40) of the integrated device.

3. The device (1) according to claim 1 or 2, wherein said ion extraction means (22) further comprise X-ray radiation shielding means (22), configured to shield the at least one ion detector (23) against said X rays, so as to reduce the exposure thereof to X rays.

4. The device (1) according to one of the preceding claims, wherein said ion extraction means (22) further comprise at least one ion guide (22).

5. The device (1) according to any of the preceding claims, further comprising at least one electro-mechanical reference pressure sensor member (12) arranged within a corresponding casing (13), that is suitable to seal the reference sensor member (12), and configured to take a closed state, in which it protects the at least one reference sensor member (12) against a direct exposure to the surrounding environment, keeping it at a reference pressure (P₂),
wherein the reference sensor member (12) is configured to detect the reference pressure value (P₂), to generate a reference electrical signal (S₂) and to provide it to the electronic processing means (10),
wherein the electronic processing means (10) comprise a memory, configured to store characterization data characterizing the reference sensor member (12) at the reference pressure (P₂),
and wherein the electronic processing means (10) are configured to calibrate the ionization-based detection member (11) and the reference sensor member (12) based on the reference electrical signal (S₂) and the stored characterization data.

6. The device (1) according to claim 5, wherein the electronic processing means (10) are configured to process data received from the reference pressure sensor member (12), and to carry out, based on said received data, a diagnostic procedure of the ionization-based detection member (11), so as to identify possible performance degradation phenomena to which the ionization-based detection member (11) is subjected.

7. The device (1) according to claim 6, wherein the electronic processing means (10) are further configured to carry out, in the case that the diagnostic procedure yields a negative outcome, an adjustment and/or compensation and/or optimization procedure on the ionization-based detection member (11) to correct and/or compensate performance degradation phenomena, that are identified based on the results of said diagnostic procedure.

8. The device (1) according to claim 7, further comprising controlled heating means, configured to operate a degassing and/or a removal of gases adsorbed on portions of the ionization-based detection member (11), under the control of the electronic processing means (10), and wherein said adjustment procedure of the ionization-based detection member (11) comprises said degassing and/or removal of adsorbed gases.

9. The device (1) according to one of the claims 5 to 8, wherein said reference sensor member (12) comprises an oscillating member (12), of the MEMS/NEMS type, configured to oscillate with an oscillation frequency that depends on the pressure to which it is subjected.

10. The device (1) according to any of the preceding claims, further comprising technical and specific protection thin films, configured to reduce the adsorption of processing gases and to prevent corrosion phenomena, and arranged so as to cover at least the ionization-based detection member (11),
or further comprising a package (80) comprising micrometer frame filters, arranged so as to cover at least the ionization-based detection member (11).

11. The device (1) according to any of the claims 2-10, wherein said detection member (11) and said electronic processing means (10) are arranged on the same side of the chip (40) composing the device (1),
or wherein said detection member (11) and said electronic processing means (10) are arranged on opposite sides of the chip (40) composing the device (1),
or they are arranged so as to project as a relief, on different planes, with respect to the surface of the chip (40) composing the device (1).

12. The device (1) according to any of the preceding claims, wherein the ionization-based detection member (11) comprises at least one selective ion filtering member, configured to shield the at least one ion detector (23) against all the ions except for a respective selected ion, so that the at least one ion detector (23) measures the partial pressure relative to said selected ion.

13. The device (1) according to claim 12 wherein the filtering member is a filtering member tunable to select and send in sequence ions of different types on a same ion detector (23), so that said ion detector (23) measures in sequence the partial pressure and/or concentration of the different ions selected.

14. The device (1) according to claim 13 wherein the ionization-based detection member (11) comprises a plurality of additional ion detectors (23) to detect a respective plurality of ions, the plurality of additional ion detectors (23) being able to be coupled to a respective plurality of said selective ion filtering members, each of said selective ion filtering members being configured to shield the corresponding ion detector (23) against all the ions except for a corresponding selected ion, so that the device acts both as a meter of total pressure, and as a meter of partial pressure and/or concentration relative to each of the plurality of said selected ions.

## Patentansprüche

1. Miniaturisierte Vorrichtung (1) für Messungen eines sehr geringen Druckniveaus, umfassend:
- ein ionisierungsbasiertes Erfassungselement (11), welches dazu eingerichtet ist, einen Druckwert (P₁) zu erfassen und ein elektrisches Signal (S₁) zu erzeugen, welches repräsentativ für den Druckwert (P₁) ist;
- elektronische Verarbeitungsmittel (10), welche mit dem ionisierungsbasierten Erfassungselement (11) wirkverbunden sind und dazu eingerichtet sind, einen gemessenen Druckwert (P) basierend auf dem elektrischen Signal (S₁) zu erzeugen;
- ein Schnittstellenmittel (15), welches mit den elektronischen Verarbeitungsmitteln (10) wirkverbunden ist und dazu eingerichtet ist, um in einem Ausgang den gemessenen Druckwert (P) bereitzustellen,
wobei das ionisierungsbasierte Erfassungselement (11), die elektronischen Verarbeitungsmittel (10), und das Schnittstellenmittel (15) von einer einzelnen integrierten Vorrichtung umfasst sind,
und wobei das ionisierungsbasierte Erfassungselement (11) umfasst:
- wenigstens eine lonisierungsquelle (21);
- einen lonisierungsbereich (20), welcher Gasteilchen beinhaltet, deren Druck gemessen werden muss, und so angeordnet ist, um von Ionisierungselektronen, welche von der Quelle (21) erzeugt wurden, durchlaufen zu werden, so dass die lonisierungselektronen die Gasteilchen ionisieren und damit jeweilige Ionen erzeugen;
- ein lonen-Extraktionsmittel (22), welches dazu eingerichtet ist, eine bevorzugte Trajektorie für die erzeugten Ionen zu bestimmen, welche wenigstens ein lonen-Extraktionsfenster (31) durchlaufen, durch welches die Ionen den lonisierungsbereich (20) verlassen;
- wenigstens einen lonendetektor (23), welcher dazu eingerichtet ist, Ionen zu erfassen und das elektrische Signal (S₁) zu erzeugen, welches abhängig von der Menge an erfassten Ionen und repräsentativ für den Druckwert der Gasteilchen ist, die in dem lonisierungsbereich (20) vorliegen,
wobei die Vorrichtung (1) **dadurch gekennzeichnet ist, dass** der wenigstens eine lonendetektor (23) mikrometrische Abmessungen aufweist und eine lonenaufprallfläche umfasst, welche eine Fläche von weniger als einem mm² aufweist,
und dass der wenigstens eine lonendetektor (23) an dem jeweiligen wenigstens einen lonen-Extraktionsfenster (31) angeordnet ist, um gegen Trajektorien von Röntgenstrahlen, welche durch Aufpralle der ionisierten Elektronen mit Teilen des lonisierungsbereichs (20) abweichend von dem wenigstens einen lonendetektor (23) erzeugt werden, abgeschirmt zu sein.

2. Vorrichtung (1) nach Anspruch 1, wobei das ionisierungsbasierte Erfassungselement (11), die elektronischen Verarbeitungsmittel (10) und das Schnittstellenmittel (15) von einem einzelnen Chip (40) der integrierten Vorrichtung umfasst sind.

3. Vorrichtung (1) nach Anspruch 1 oder 2, wobei das lonen-Extraktionsmittel (22) ferner ein Röntgenstrahlen-Abschirmungsmittel (22) umfasst, welches dazu eingerichtet ist, den wenigstens einen lonendetektor (23) gegen die Röntgenstrahlen abzuschirmen, um die Aussetzung dessen gegenüber Röntgenstrahlen zu reduzieren.

4. Vorrichtung (1) nach einem der vorhergehenden Ansprüche, wobei das Ionen-Extraktionsmittel (22) ferner wenigstens eine lonenführung (22) umfasst.

5. Vorrichtung (1) nach einem der vorhergehenden Ansprüche, ferner umfassend wenigstens ein elektromechanisches Referenzdrucksensorelement (12), welches innerhalb einem entsprechenden Gehäuse (13) angeordnet ist, welches dafür geeignet ist, das Referenzsensorelement (12) abzudichten, und dazu eingerichtet ist, einen geschlossenen Zustand einzunehmen, in welchem es das wenigstens eine Referenzsensorelement (12) gegen eine direkte Aussetzung an die Umgebung schützt, wobei es bei einem Referenzdruck (P₂) gehalten wird,
wobei das Referenzsensorelement (12) dazu eingerichtet ist, den Referenzdruckwert (P₂) zu erfassen, um ein elektrisches Referenzsignal (S₂) zu erzeugen und es den elektronischen Verarbeitungsmitteln (10) bereitzustellen,
wobei die elektronischen Verarbeitungsmittel (10) einen Speicher umfassen, welcher dazu eingerichtet ist, Kennzeichnungsdaten zu speichern, welche das Referenzsensorelement (12) bei dem Referenzdruck (P₂) kennzeichnen,
und wobei die elektronischen Verarbeitungsmittel (10) dazu eingerichtet sind, das ionisierungsbasierte Erfassungselement (11) und das Referenzsensorelement (12) basierend auf dem elektrischen Referenzsignal (S₂) und den gespeicherten Kennzeichnungsdaten zu kalibrieren.

6. Vorrichtung (1) nach Anspruch 5, wobei die elektronischen Verarbeitungsmittel (10) dazu eingerichtet sind, Daten zu verarbeiten, welche von dem Referenzdrucksensorelement (12) empfangen werden, und, basierend auf den empfangenen Daten, ein Diagnoseverfahren des ionisierungsbasierten Erfassungselements (11) auszuführen, um mögliche Leistungsverminderungsphänomene zu identifizieren, welchen das ionisierungsbasierte Erfassungselement (11) ausgesetzt ist.

7. Vorrichtung (1) nach Anspruch 6, wobei die elektronischen Verarbeitungsmittel (10) ferner dazu eingerichtet sind, in dem Fall, dass das Diagnoseverfahren ein negatives Ergebnis ergibt, ein Anpassungs- und/oder ein Kompensations- und/oder ein Optimierungsverfahren an dem ionisierungsbasierten Erfassungselement (11) auszuführen, um Leistungsverminderungsphänomene zu korrigieren und/oder zu kompensieren, die basierend auf den Ergebnissen des Diagnoseverfahrens identifiziert wurden.

8. Vorrichtung (1) nach Anspruch 7, ferner umfassend ein geregeltes Heizmittel, welches dazu eingerichtet ist, eine Entgasung und/oder eine Entfernung von Gasen, welche auf Abschnitten des ionisierungsbasierten Erfassungselements (11) adsorbiert sind, unter der Regelung der elektronischen Verarbeitungsmittel (10) durchzuführen, und wobei das Anpassungsverfahren des ionisierungsbasierten Erfassungselements (11) die Entgasung und/oder die Entfernung von adsorbierten Gasen umfasst.

9. Vorrichtung (1) nach einem der Ansprüche 5 bis 8, wobei das Referenzsensorelement (12) ein oszillierendes Element (12) des MEMS/ NEMS Typs umfasst, welches dazu eingerichtet ist, mit einer Oszillationsfrequenz zu oszillieren, welche von dem Druck abhängt, welchem es ausgesetzt ist.

10. Vorrichtung (1) nach einem der vorhergehenden Ansprüche, ferner umfassend technische und spezifische Schutz-Dünnschichten, welche dazu eingerichtet sind, die Adsorption von Prozessgasen zu reduzieren und Korrosionsphänomene zu verhindern, und so angeordnet sind, um wenigstens das ionisierungsbasierte Erfassungselement (11) abzudecken,
oder ferner umfassend eine Verpackung (80) umfassend Mikrometer-Rahmenfilter, welche so angeordnet sind, um wenigstens das ionisierungsbasierte Erfassungselement (11) abzudecken.

11. Vorrichtung (1) nach einem der Ansprüche 2 bis 10, wobei das Erfassungselement (11) und die elektronischen Verarbeitungsmittel (10) an der gleichen Seite des Chips (40) angeordnet sind, aus welchem die Vorrichtung (1) aufgebaut ist,
oder wobei das Erfassungselement (11) und die elektronischen Verarbeitungsmittel (10) an gegenüberliegenden Seiten des Chips (40) angeordnet sind, aus welchem die Vorrichtung (1) aufgebaut ist,
oder sie so angeordnet sind, um als ein Relief auf verschiedenen Ebenen in Bezug auf die Flächen des Chips (40), aus welchem die Vorrichtung (1) aufgebaut ist, hervor zu stehen.

12. Vorrichtung (1) nach einem der vorhergehenden Ansprüche, wobei das ionisierungsbasierte Erfassungselement (11) wenigstens ein selektives Ionen-Filterelement umfasst, welches dazu eingerichtet ist, den wenigstens einen lonendetektor (23) gegen alle Ionen bis auf ein jeweiliges ausgewähltes Ion abzuschirmen, sodass der wenigstens eine lonendetektor (23) den Partialdruck relativ zu dem ausgewählten Ion misst.

13. Vorrichtung (1) nach Anspruch 12, wobei das Filterelement ein Filterelement ist, welches einstellbar ist, um Ionen verschiedener Typen an einem gleichen lonendetektor (23) auszuwählen und der Reihe nach zu entsenden, so dass der lonendetektor (23) der Reihe nach den Partialdruck und/oder die Konzentration der verschiedenen ausgewählten Ionen misst.

14. Vorrichtung (1) nach Anspruch 13, wobei das ionisierungsbasierte Erfassungselement (11) eine Mehrzahl von zusätzlichen lonendetektoren (23) umfasst, um eine entsprechende Mehrzahl von Ionen zu erfassen, wobei die Mehrzahl von zusätzlichen lonendetektoren (23), dazu geeignet ist, um mit einer entsprechenden Mehrzahl der ausgewählten lonen-Filterelemente gekoppelt zu werden, wobei jedes der ausgewählten lonen-Filterelemente dazu eingerichtet ist, den entsprechenden lonendetektor (23) gegen alle Ionen bis auf ein entsprechendes ausgewähltes Ion abzuschirmen, sodass die Vorrichtung sowohl als ein Messgerät eines Gesamtdrucks, als auch als ein Messgerät eines Partialdrucks und/ oder einer Konzentration relativ zu jedem der Mehrzahl der ausgewählten Ionen funktioniert.

## Revendications

1. Dispositif miniaturisé pour mesures de pression de niveau très bas (1), comprenant :
- un élément de détection par ionisation (11), configuré pour détecter une valeur de pression (P₁) et pour générer un signal électrique (S₁) représentatif de ladite valeur de pression (P₁) ;
- des moyens de traitement électronique (10), reliés fonctionnellement audit élément de détection par ionisation (11), et configurés pour générer une valeur de pression mesurée (P) sur la base dudit signal électrique (S₁) ;
- des moyens d'interface (15), reliés fonctionnellement auxdits moyens de traitement électronique (10) et configurés pour fournir en sortie ladite valeur de pression mesurée (P),
dans lequel lesdits élément de détection par ionisation (11), moyens de traitement électronique (10), et moyens d'interface (15) sont compris dans un dispositif intégré unique,
et dans lequel l'élément de détection par ionisation (11) comprend :
- au moins une source d'ionisation (21) ;
- une région d'ionisation (20), contenant des particules de gaz dont la pression doit être mesurée, agencée de manière à être traversée par des électrons d'ionisation générés par ladite source (21), de sorte que les électrons d'ionisation ionisent les particules de gaz, générant ainsi des ions respectifs ;
- des moyens d'extraction d'ions (22), configurés pour déterminer une trajectoire préférentielle pour les ions générés, passant à travers au moins une fenêtre d'extraction d'ions (31), à travers laquelle les ions quittent la région d'ionisation (20) ;
- au moins un détecteur d'ions (23), configuré pour détecter des ions et générer ledit signal électrique (S₁) dépendant de la quantité d'ions détectés et représentatif de la valeur de pression des particules de gaz qui sont présentes dans la région d'ionisation (20),
le dispositif (1) étant **caractérisé en ce que** ledit au moins un détecteur d'ions (23) a des dimensions micrométriques et comprend une surface d'impact d'ions ayant une aire inférieure à un mm², et
ledit au moins un détecteur d'ions (23) est agencé au niveau de ladite au moins une fenêtre respective d'extraction d'ions (31), de sorte à être protégé contre les trajectoires de rayons X générés par les impacts des électrons d'ionisation avec des parties de la région d'ionisation (20) autres que l'au moins un détecteur d'ions (23).

2. Dispositif (1) selon la revendication 1, dans lequel lesdits élément de détection par ionisation (11), moyens de traitement électronique (10) et moyens d'interface (15) sont compris dans une puce unique (40) du dispositif intégré.

3. Dispositif (1) selon la revendication 1 ou 2, dans lequel lesdits moyens d'extraction d'ions (22) comprennent en outre des moyens de protection contre les rayons X (22), configurés pour protéger l'au moins un détecteur d'ions (23) contre lesdits rayons X de sorte à réduire son exposition aux rayons X.

4. Dispositif (1) selon l'une des revendications précédentes, dans lequel lesdits moyens d'extraction d'ions (22) comprennent en outre au moins un guide d'ions (22).

5. Dispositif (1) selon l'une quelconque des revendications précédentes, comprenant en outre au moins un élément de capteur de pression de référence électromécanique (12) agencé à l'intérieur d'un boîtier (13) correspondant, qui est adapté pour sceller l'élément de capteur de référence (12), et configuré pour prendre un état fermé, dans lequel il protège l'au moins un élément de capteur de référence (12) contre une exposition directe à l'environnement ambiant, le maintenant à une pression de référence (P₂),
dans lequel l'élément de capteur de référence (12) est configuré pour détecter la valeur de pression de référence (P₂), pour générer un signal électrique de référence (S₂) et pour le fournir aux moyens de traitement électronique (10),
dans lequel les moyens de traitement électronique (10) comprennent une mémoire, configurée pour stocker des données de caractérisation caractérisant l'élément de capteur de référence (12) à la pression de référence (P₂), et dans lequel les moyens de traitement électronique (10) sont configurés pour calibrer l'élément de détection par ionisation (11) et l'élément de capteur de référence (12) sur la base du signal électrique de référence (S₂) et des données de caractérisation stockées.

6. Dispositif (1) selon la revendication 5, dans lequel les moyens de traitement électronique (10) sont configurés pour traiter des données reçues de l'élément de capteur de pression de référence (12), et pour effectuer, sur la base desdites données reçues, une procédure de diagnostic de l'élément de détection par ionisation (11), de manière à identifier de possibles phénomènes de dégradation de performance auxquels l'élément de détection par ionisation (11) est soumis.

7. Dispositif (1) selon la revendication 6, dans lequel les moyens de traitement électronique (10) sont configurés en outre pour effectuer, dans le cas où la procédure de diagnostic donne un résultat négatif, une procédure d'ajustement et/ou de compensation et/ou d'optimisation sur l'élément de détection par ionisation (11) pour corriger et/ou compenser les phénomènes de dégradation de performance, qui sont identifiés sur la base des résultats de ladite procédure de diagnostic.

8. Dispositif (1) selon la revendication 7, comprenant en outre des moyens de chauffage commandés, configurés pour actionner un dégazage et/ou une élimination de gaz adsorbés sur des parties de l'élément de détection par ionisation (11), sous la commande des moyens de traitement électronique (10), et dans lequel ladite procédure d'ajustement de l'élément de détection par ionisation (11) comprend ledit dégazage et/ou élimination de gaz adsorbés.

9. Dispositif (1) selon l'une des revendications 5 à 8, dans lequel ledit élément de capteur de référence (12) comprend un élément oscillant (12), de type MEMS/NEMS, configuré pour osciller avec une fréquence d'oscillation qui dépend de la pression à laquelle il est soumis.

10. Dispositif (1) selon l'une quelconque des revendications précédentes, comprenant en outre des films minces de protection techniques et spécifiques, configurés pour réduire l'adsorption de gaz de traitement et empêcher des phénomènes de corrosion, et agencés de manière à couvrir au moins l'élément de détection par ionisation (11),
ou comprenant en outre un paquet (80) comprenant des filtres de cadre micrométriques, agencé de manière à couvrir au moins l'élément de détection par ionisation (11).

11. Dispositif (1) selon l'une quelconque des revendications 2 à 10, dans lequel ledit élément de détection (11) et lesdits moyens de traitement électronique (10) sont agencés du même côté de la puce (40) composant le dispositif (1),
ou dans lequel ledit élément de détection (11) et lesdits moyens de traitement électronique (10) sont agencés sur des côtés opposés de la puce (40) composant le dispositif (1),
ou ils sont agencés de manière à faire saillie en tant que relief, sur des plans différents, par rapport à la surface de la puce (40) composant le dispositif (1).

12. Dispositif (1) selon l'une quelconque des revendications précédentes, dans lequel l'élément de détection par ionisation (11) comprend au moins un élément de filtrage d'ions sélectif, configuré pour protéger l'au moins un détecteur d'ions (23) contre tous les ions à l'exception d'un ion sélectionné respectif, de sorte que l'au moins un détecteur d'ions (23) mesure la pression partielle par rapport audit ion sélectionné.

13. Dispositif (1) selon la revendication 12, dans lequel l'élément de filtrage est un élément de filtrage accordable pour sélectionner et envoyer en séquence des ions de différents types sur un même détecteur d'ions (23), de sorte que ledit détecteur d'ions (23) mesure en séquence la pression partielle et/ou la concentration de différents ions sélectionnés.

14. Dispositif (1) selon la revendication 13, dans lequel l'élément de détection par ionisation (11) comprend une pluralité de détecteurs d'ions supplémentaires (23) pour détecter une pluralité respective d'ions, la pluralité de détecteurs d'ions supplémentaires (23) étant capable d'être couplée à une pluralité respective desdits éléments de filtrage d'ions sélectifs, chacun desdits éléments de filtrage d'ions sélectifs étant configuré pour protéger le détecteur d'ions (23) correspondant contre tous les ions à l'exception d'un ion sélectionné correspondant, de sorte que le dispositif agit à la fois comme un compteur de pression totale, et comme un compteur de pression partielle et/ou de concentration par rapport à chacun de la pluralité desdits ions sélectionnés.
